# EUROPEAN PATENT APPLICATION

(11) **EP 4 748 604 A1**
(43) Date of publication of application: **27.05.2026**
(21) Application number: 25210354.4
(22) Date of filing: 22.10.2025
(51) Int. Cl.: B60K 1/04

(54) **PROTECTIVE STRUCTURE OF BATTERY PACK**

(30) Priority: 20.11.2024 JP 2024202315
(71) Applicant: Suzuki Motor Corporation, Shizuoka 432-8611 (JP)
(72) Inventor: FUJII, Fumihiro, HAMAMATSU-SHI, 432-8611 (JP); KIUCHI, Seita, HAMAMATSU-SHI, 432-8611 (JP); KAWAI, Ikumi, HAMAMATSU-SHI, 432-8611 (JP)
(74) Representative: Plasseraud IP

(57) **Abstract**

[Problem to be Solved]

To provide a protective structure of a battery pack (10), the protective structure being capable of protecting the battery pack (10) from an impact occurring in a side collision of a vehicle (1).

[Solution]

A cover (40) covers a bracket (30) and an exhaust gas duct (20) from above and from the sides. The cover (40) includes a first cover part (40A) and a second cover part (40B), the first cover part (40A) covering portions, of the bracket (30) and the exhaust gas duct (20), located on the other side in a vehicle width direction of one end portion of the bracket (30) in the vehicle width direction, the second cover part (40B) extending from the first cover part (40A) toward one side in the vehicle width direction and covering portions, of the bracket (30) and the exhaust gas duct (20), located on one side in the vehicle width direction of the one end portion of the bracket (30) in the vehicle width direction. A rear surface (42) and a front surface (41) of the cover (40) have notched parts (41A, 42A) each of which is formed in a parabolic shape by notching from below, the parabolic shape having the apex at a position of a boundary between the first cover part (40A) and the second cover part (40B).

## Description

### [Technical Field]

The present invention relates to a protective structure of a battery pack.

### [Background Art]

Patent Literature 1 discloses a cooling structure of a battery for a vehicle in which a battery is mounted on a floor panel, wherein the battery is disposed in a space surrounded by a closed cross-section member mounted on the floor panel, the closed cross-section member is in communication with the outside of the vehicle, and the closed cross-section member has an air discharge hole formed at a predetermined position that corresponds to the battery. In this cooling structure of the battery for the vehicle, the closed cross-section member is constituted of side sill parts, a plurality of front and rear cross member parts, and a floor tunnel part, and the battery is surrounded by these components. In addition, seat fixing parts are provided to the cross member parts, and a seat is disposed above the battery.

### [Citation List]

### [Patent Literature]

[Patent Literature 1] JP2000-233648A

### [Summary of Invention]

### [Technical Problem]

However, in the conventional technique described in Patent Literature 1, there is a risk of a battery pack being damaged by an impact occurring in a side collision of the vehicle. That is, in the technique described in Patent Literature 1, the battery is mounted below the front seat, and the outer end portion of the battery in the vehicle width direction is in close proximity to the lateral end portion of the vehicle and hence, there is a risk that an impact occurring in a side collision of the vehicle acts on the battery, thereby damaging the battery pack.

The present invention has been made by focusing on the above-mentioned problem, and it is an object of the present invention to provide a protective structure of a battery pack, the protective structure being capable of protecting the battery pack from an impact occurring in a side collision of the vehicle.

### [Solution to Problem]

The present invention is directed to a protective structure of a battery pack for a vehicle, the vehicle including: a floor panel forming a floor surface of a cabin; a battery pack disposed on an upper surface of the floor panel on one side in a vehicle width direction below a front seat; a bracket configured to cover the battery pack, and fixed to the floor panel; a discharge port formed in the floor panel on one side of the bracket in the vehicle width direction, the discharge port being in communication with an outside of the cabin below the floor panel; and an exhaust gas duct including a battery coupling part, a discharge port coupling part, and a hose part, and configured to discharge gas generated in the battery pack to the outside of the cabin, the battery coupling part being coupled to a rear surface of the battery pack, the discharge port coupling part being coupled to the discharge port, the hose part coupling the battery coupling part and the discharge port coupling part to each other, the protective structure being characterized in that the discharge port is formed in the floor panel in a vicinity of one side surface of the bracket in the vehicle width direction, the hose part extends from the battery coupling part toward one side in the vehicle width direction along a rear surface of the bracket, is bent at a position of one end portion of the bracket in the vehicle width direction to extend toward a front side of the vehicle, and is then coupled to the discharge port coupling part, the bracket and the exhaust gas duct are covered by a cover from above and from a side, the cover includes a first cover part configured to cover portions, of the bracket and the exhaust gas duct, located on the other side in the vehicle width direction of the one end portion of the bracket in the vehicle width direction, and a second cover part extending from the first cover part toward the one side in the vehicle width direction, and configured to cover portions, of the bracket and the exhaust gas duct, located on one side in the vehicle width direction of the one end portion of the bracket in the vehicle width direction, and a rear surface and a front surface of the cover have notched parts each of which is formed in a parabolic shape by notching from below, the parabolic shape having an apex at a position of a boundary between the first cover part and the second cover part.

### [Advantageous Effect of Invention]

As described above, according to the present invention, it is possible to provide a protective structure of a battery pack, the protective structure being capable of protecting the battery pack from an impact occurring in a side collision of the vehicle.

### [Brief Description of Drawings]

[Figure 1] Figure 1 is a plan view of a vehicle equipped with a protective structure of a battery pack according to one embodiment of the present invention.
[Figure 2] Figure 2 is a perspective view of a battery pack and a cover, the battery pack being equipped with the protective structure of the battery pack according to one embodiment of the present invention.
[Figure 3] Figure 3 is a perspective view of the battery pack equipped with the protective structure of the battery pack according to one embodiment of the present invention.
[Figure 4] Figure 4 is a plan view of the battery pack and the cover, the battery pack being equipped with the protective structure of the battery pack according to one embodiment of the present invention.
[Figure 5] Figure 5 is a back view of the battery pack and the cover, the battery pack being equipped with the protective structure of the battery pack according to one embodiment of the present invention.
[Figure 6] Figure 6 is a back view showing the state of the battery pack and the cover in a side collision of the vehicle, the battery pack being equipped with the protective structure of the battery pack according to one embodiment of the present invention.

### [Description of Embodiment]

A protective structure of a battery pack according to one embodiment of the present invention is a protective structure of a battery pack for a vehicle, the vehicle including: a floor panel forming a floor surface of a cabin; a battery pack disposed on an upper surface of the floor panel on one side in a vehicle width direction below a front seat; a bracket configured to cover the battery pack, and fixed to the floor panel; a discharge port formed in the floor panel on one side of the bracket in the vehicle width direction, the discharge port being in communication with an outside of the cabin below the floor panel; and an exhaust gas duct including a battery coupling part, a discharge port coupling part, and a hose part, and configured to discharge gas generated in the battery pack to the outside of the cabin, the battery coupling part being coupled to a rear surface of the battery pack, the discharge port coupling part being coupled to the discharge port, the hose part coupling the battery coupling part and the discharge port coupling part to each other, the protective structure being characterized in that the discharge port is formed in the floor panel in a vicinity of one side surface of the bracket in the vehicle width direction, the hose part extends from the battery coupling part toward one side in the vehicle width direction along a rear surface of the bracket, is bent at a position of one end portion of the bracket in the vehicle width direction to extend toward a front side of the vehicle, and is then coupled to the discharge port coupling part, the bracket and the exhaust gas duct are covered by a cover from above and from a side, the cover includes a first cover part configured to cover portions, of the bracket and the exhaust gas duct, located on the other side in the vehicle width direction of the one end portion of the bracket in the vehicle width direction, and a second cover part extending from the first cover part toward the one side in the vehicle width direction, and configured to cover portions, of the bracket and the exhaust gas duct, located on one side in the vehicle width direction of the one end portion of the bracket in the vehicle width direction, and a rear surface and a front surface of the cover have notched parts each of which is formed in a parabolic shape by notching from below, the parabolic shape having an apex at a position of a boundary between the first cover part and the second cover part. With such a configuration, the protective structure of the battery pack according to one embodiment of the present invention can protect the battery pack from an impact occurring in a side collision of the vehicle.

### [Embodiment]

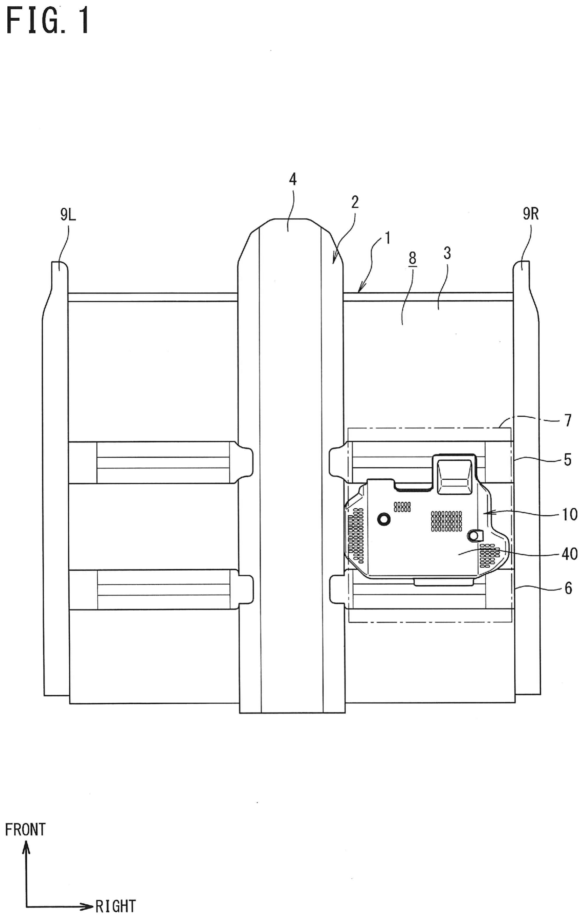

Hereinafter, a protective structure of a battery pack according to one embodiment of the present invention will be described with reference to drawings. Figure 1 to Figure 6 are diagrams showing the protective structure of the battery pack according to one embodiment of the present invention. In Figure 1 to Figure 6, the directions indicated by "up", "down", "right", and "left" refer to directions as viewed from the driver's seat.

First, the configuration will be described. In Figure 1, a vehicle 1 includes a vehicle body 2. The vehicle body 2 includes a floor panel 3, and the floor panel 3 forms the floor surface of a cabin 8.

A floor tunnel 4 extending in the front-rear direction is provided at the center portion of the floor panel 3 in the vehicle width direction. The floor tunnel 4 protrudes upward in a trapezoidal shape. Left and right side sills 9L, 9R extending in the front-rear direction are provided at both end portions of the floor panel 3 in the vehicle width direction.

Seat cross members 5, 6 extending in the vehicle width direction are provided to the floor panel 3.

The seat cross members 5, 6 support front seats 7 via seat rails not shown in the drawing.

The seat cross members 5, 6 are connected to the floor tunnel 4 and the left and right side sills 9L, 9R, and protrude upward in a trapezoidal shape. The seat cross members 6 are disposed behind the seat cross members 5.

The right front seat 7 is disposed on the upper surface of the floor panel 3 on one side (right side) in the vehicle width direction. The area on the one side (right side) in the vehicle width direction on the upper surface of the floor panel 3 refers to a portion that is located on the floor panel 3, and is surrounded by the floor tunnel 4 and the right side sill 9R. A battery pack 10 is disposed on the upper surface of the floor panel 3 below the front seat 7.

The battery pack 10 is disposed between the front and rear seat cross members 5, 6. The battery pack 10 is an assembled battery formed by combining a plurality of battery modules, each of which is formed of a plurality of cells not shown in the drawing. The battery pack 10 supplies electric power of 48 V, for example, to electric components, a motor, and other components not shown in the drawing of the vehicle 1.

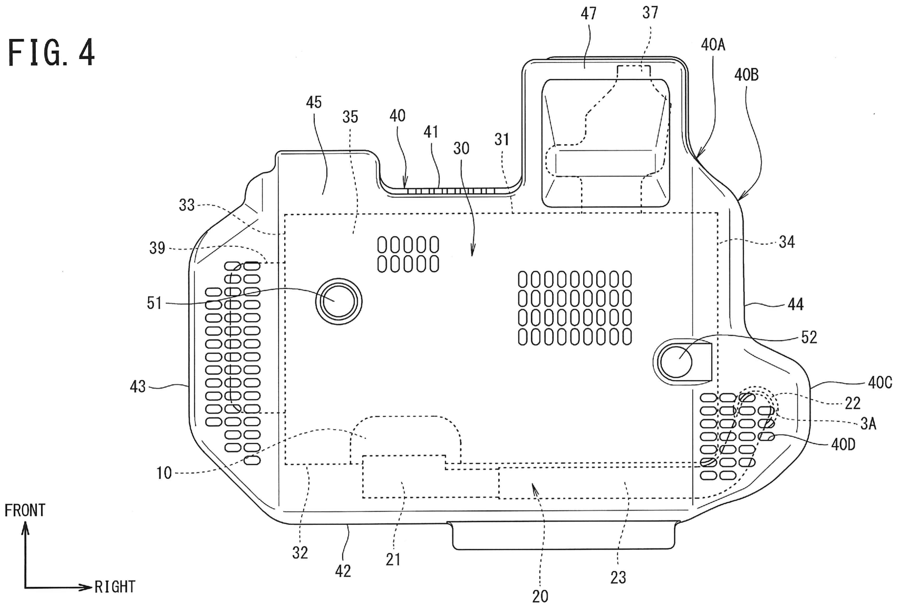

The floor panel 3 has a discharge port 3A (see Figure 4). The discharge port 3A is in communication with an outside of the cabin below the floor panel 3. The discharge port 3A is formed in the floor panel 3 in the vicinity of one side surface (right side surface) of a bracket 30 in the vehicle width direction.

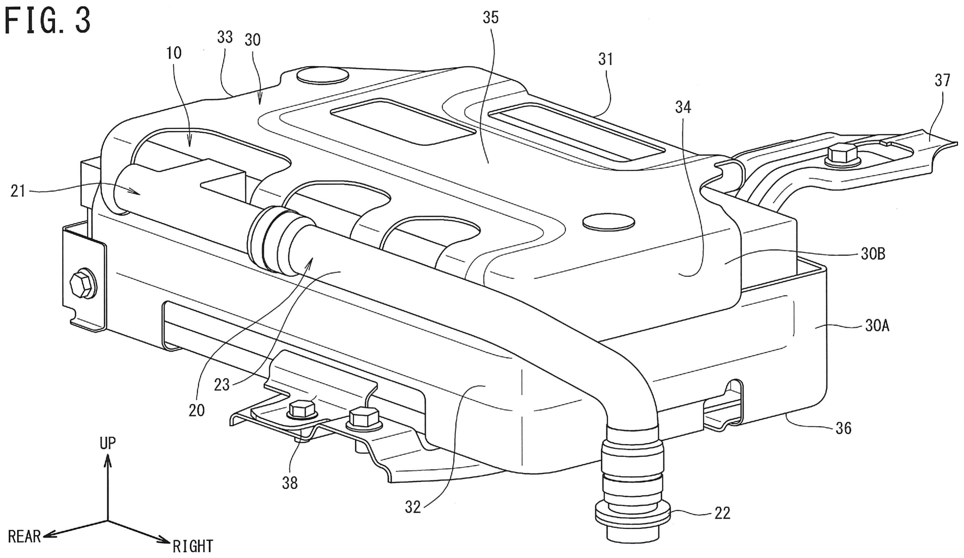

In Figure 3, the battery pack 10 is covered by the bracket 30. The bracket 30 is fixed to the floor panel 3.

In Figure 1, Figure 2, Figure 4, and Figure 5, the battery pack 10 covered by the bracket 30 is further covered by a cover 40 made of resin.

In Figure 3, Figure 4, and Figure 5, the bracket 30 includes a front surface 31, a rear surface 32, a left side surface 33, a right side surface 34, an upper surface 35, and a bottom surface 36, the front surface 31 covering the front surface of the battery pack 10, the rear surface 32 covering the rear surface of the battery pack 10, the left side surface 33 covering the left side surface of the battery pack 10, the right side surface 34 covering the right side surface of the battery pack 10, the upper surface 35 covering the upper surface of the battery pack 10, the bottom surface 36 covering the bottom surface of the battery pack 10.

The bracket 30 also includes a front leg part 37, a rear leg part 38, and a left leg part 39, the front leg part 37 being fixed to the upper surface of the seat cross member 5, the rear leg part 38 being fixed to the upper surface of the floor panel 3 in the vicinity of the rear side of the battery pack 10, the left leg part 39 being fixed to the upper surface of the floor panel 3 in the vicinity of the left side of the battery pack 10.

The bracket 30 also includes a lower bracket 30A and an upper bracket 30B, the lower bracket 30A covering the bottom surface and the lower portions of the side surfaces of the battery pack 10, the upper bracket 30B covering the upper surface and the upper portions of the side surfaces of the battery pack 10, and overlapping with the lower bracket on the side surfaces of the battery pack 10.

In Figure 3, an exhaust gas duct 20 is coupled to the battery pack 10, and the exhaust gas duct 20 discharges gas generated in the battery pack 10 to the outside of the cabin. The exhaust gas duct 20 includes a battery coupling part 21, a discharge port coupling part 22, and a hose part 23, the battery coupling part 21 being coupled to the rear surface of the battery pack 10, the discharge port coupling part 22 being coupled to the discharge port 3A, the hose part 23 coupling the battery coupling part 21 and the discharge port coupling part 22 to each other. The battery coupling part 21 and the discharge port coupling part 22 are made of hard resin, and the hose part 23 is made of rubber.

The hose part 23 extends from the battery coupling part 21 toward one side in the vehicle width direction along the rear surface 32 of the bracket 30, is bent at the position of one end portion of the bracket 30 in the vehicle width direction to extend toward the front side of the vehicle, and is then coupled to the discharge port coupling part 22.

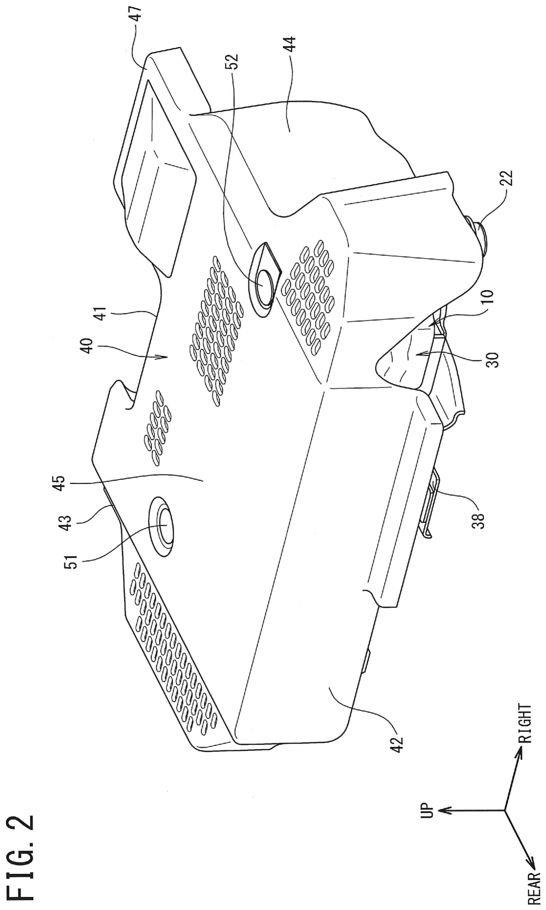

In Figure 2, Figure 4, and Figure 5, the bracket 30 and the exhaust gas duct 20 are covered by the cover 40 from above and from the side.

A front surface 41 of the cover 40 covers the bracket 30 from the front, and faces the front surface 31 of the bracket 30 in the front-rear direction of the vehicle.

A rear surface 42 of the cover 40 covers the bracket 30 from the rear, and faces the rear surface 32 of the bracket 30 and the exhaust gas duct 20 in the front-rear direction of the vehicle.

A left side surface 43 of the cover 40 covers the bracket 30 from the left, and faces the left side surface 33 of the bracket 30 in the vehicle width direction.

A right side surface 44 of the cover 40 covers the bracket 30 from the right, and faces the right side surface 34 of the bracket 30 in the vehicle width direction.

An upper surface 45 of the cover 40 covers the bracket 30 from above, and faces the upper surface 35 of the bracket 30 and the exhaust gas duct 20 in the up-down direction of the vehicle.

As shown in Figure 2 and Figure 4, a portion of the upper surface 45 of the cover 40 that is located in the vicinity of the left end portion of the upper surface 45 is fixed by a clip 51 to a portion of the upper surface 35 of the bracket 30 that is located in the vicinity of the left end portion of the upper surface 35. Further, a portion of the upper surface 45 of the cover 40 that is located in the vicinity of the right end portion of the upper surface 45 is fixed by a clip 52 to a portion of the upper surface 35 of the bracket 30 that is located in the vicinity of the right end portion of the upper surface 35. Furthermore, a portion of the front surface 41 of the cover 40 that is located in the vicinity of the right end portion of the front surface 41 forms a projecting part 47 that projects forward, and this projecting part 47 covers the front leg part 37 of the bracket 30 from above. A triangular protrusion that is engaged with the front end portion of the front leg part 37 and not shown in the drawing is formed on the inner surface of the front end portion of the projecting part 47, and the projecting part 47 of the cover 40 is locked by the front leg part 37. As described above, the cover 40 is fixed to the bracket 30 at three positions.

In the present embodiment, the cover 40 includes a first cover part 40A and a second cover part 40B, the first cover part 40A covering portions, of the bracket 30 and the exhaust gas duct 20, located on the other side in the vehicle width direction of one end portion of the bracket 30 in the vehicle width direction, the second cover part 40B extending from the first cover part 40A toward one side in the vehicle width direction and covering portions, of the bracket 30 and the exhaust gas duct 20, located on one side in the vehicle width direction of the one end portion of the bracket 30 in the vehicle width. The one end portion of the bracket 30 in the vehicle width direction refers to the position of the right side surface 34 of the bracket 30, and is indicated by "position P1". The position P1 is the position of the boundary between the first cover part 40A and the second cover part 40B.

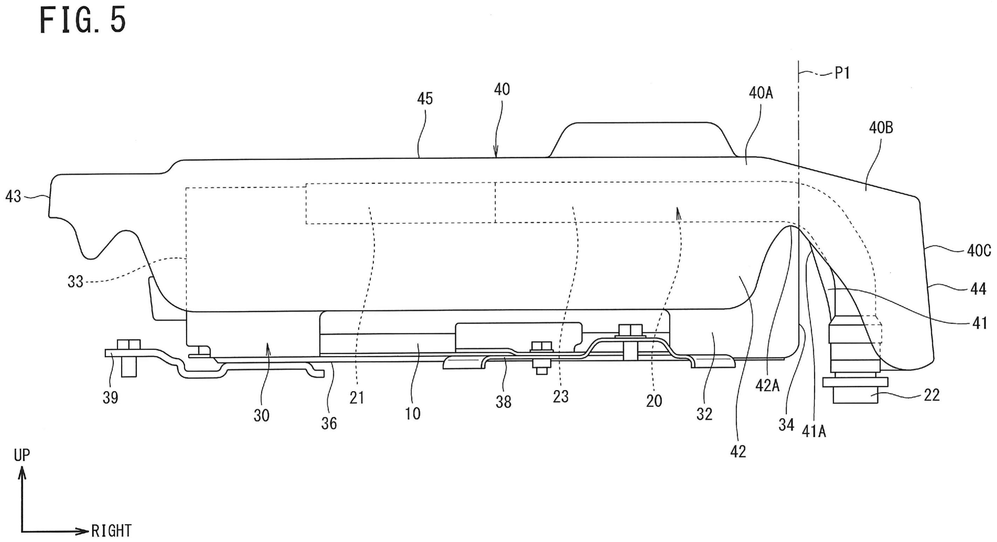

In Figure 5, the rear surface 42 and the front surface 41 of the cover 40 have notched parts 41A, 42A each of which is formed in a parabolic shape by notching from below, the parabolic shape having the apex at the position of the boundary between the first cover part 40A and the second cover part 40B. That is, the notched parts 41A, 42A are formed in a parabolic shape having the apex at the deepest part of the notch.

The upper surface 45 of the second cover part 40B is inclined downward toward one side in the vehicle width direction.

The second cover part 40B includes a projecting part 40C that projects toward one side in the vehicle width direction above the discharge port coupling part 22.

In Figure 4, the upper surface 45 of the second cover part 40B has a plurality of narrow holes 40D that are in communication with the inner surface and the outer surface of the second cover part 40B.

As described above, in the present embodiment, the discharge port 3A is formed in the floor panel 3 in the vicinity of one side surface (right side surface) of the bracket 30 in the vehicle width direction, and the hose part 23 extends from the battery coupling part 21 toward one side in the vehicle width direction along the rear surface 32 of the bracket 30, is bent at the position of one end portion of the bracket 30 in the vehicle width direction to extend toward the front side of the vehicle, and is then coupled to the discharge port coupling part 22. The bracket 30 and the exhaust gas duct 20 are covered by the cover 40 from above and from the sides. The cover 40 includes the first cover part 40A and the second cover part 40B, the first cover part 40A covering the portions, of the bracket 30 and the exhaust gas duct 20, located on the other side in the vehicle width direction of the one end portion of the bracket 30 in the vehicle width direction, the second cover part 40B extending from the first cover part 40A toward the one side in the vehicle width direction, and covering the portions, of the bracket 30 and the exhaust gas duct 20, located on the one side in the vehicle width direction of the one end portion of the bracket 30 in the vehicle width direction. The rear surface 42 and the front surface 41 of the cover 40 have the notched parts 41A, 42A each of which is formed in a parabolic shape by notching from below, the parabolic shape having the apex at the position of the boundary between the first cover part 40A and the second cover part 40B.

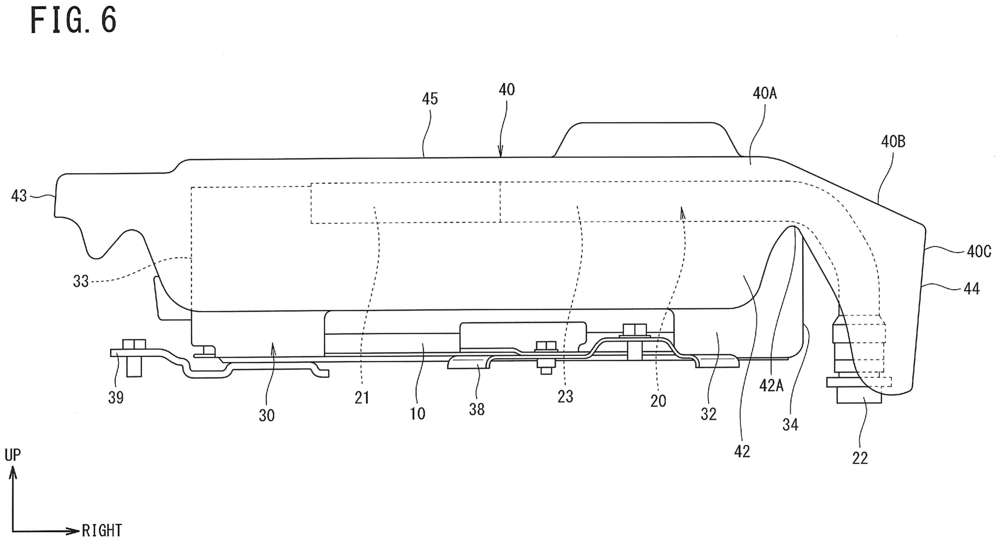

With such a configuration, it is possible to introduce brittleness into the notched parts 41A, 42A of the cover 40 and hence, as shown in Figure 6, the second cover part 40B can be displaced downward by the preferential bending of the notched parts 41A, 42A in response to an impact occurring in a side collision of the vehicle 1. Accordingly, it is possible to cause the second cover part 40B to serve as a cushioning member and hence, it is possible to protect the battery pack 10 from the impact occurring in the side collision of the vehicle 1. In addition, a portion of the hose part 23 of the exhaust gas duct 20 is disposed between the battery pack 10 and the second cover part 40B and hence, it is possible to cause the hose part 23 to serve as a cushioning member. Accordingly, it is possible to protect the battery pack 10 from a collision load occurring in the side collision of the vehicle 1. As a result, it is possible to protect the battery pack 10 from the impact occurring in the side collision of the vehicle 1.

In the present embodiment, the upper surface 45 of the second cover part 40B is inclined downward toward the one side in the vehicle width direction.

With such a configuration, an impact occurring in a side collision of the vehicle 1 acts to push down the second cover part 40B, thereby facilitating downward displacement of the second cover part 40B by bending the notched parts 41A, 42A and hence, it is possible to protect the battery pack 10 from the impact occurring in the side collision of the vehicle 1.

In the present embodiment, the second cover part 40B includes the projecting part 40C that projects toward the one side in the vehicle width direction above the discharge port coupling part 22.

With such a configuration, an impact occurring in a side collision of the vehicle 1 can be preferentially received by the projecting part 40C of the second cover part 40B and hence, it is possible to protect the battery pack 10.

In the present embodiment, the upper surface 45 of the second cover part 40B has the plurality of narrow holes 40D that are in communication with the inner surface and the outer surface of the second cover part 40B.

With such a configuration, heat generated from the battery pack 10 can be released to the outside through the narrow holes 40D of the second cover part 40B. In addition, providing the narrow holes 40D facilitates bending of the upper surface 45 of the second cover part 40B, thereby allowing the notched parts 41A, 42A to be easily bent in a side collision of the vehicle 1, thus enabling smooth downward displacement of the second cover part 40B.

In the present embodiment, the hose part 23 is made of rubber.

With such a configuration, it is possible to cause the hose part 23 made of rubber to serve as a cushioning member and hence, it is possible to protect the battery pack 10 from a collision load occurring in a side collision of the vehicle 1.

Although the embodiment of the present invention has been disclosed, it is apparent that modifications may be applied by those who are skilled in the art without departing from the scope of the present invention. All of such modifications and equivalents are intended to be encompassed by the following claims.

### [Reference Signs List]

1 vehicle, 3 floor panel, 3A discharge port, 7 front seat, 8 cabin, 10 battery pack, 20 exhaust gas duct, 21 battery coupling part, 22 discharge port coupling part, 23 hose part, 30 bracket, 32 rear surface, 34 right side surface (one side surface in vehicle width direction), 40 cover, 40A first cover part, 40B second cover part, 40C projecting part, 40D narrow hole, 41A, 42A notched part, 42 rear surface, 45 upper surface, P1 position (position of one end portion in vehicle width direction)

## Claims

1. A protective structure of a battery pack (10) for a vehicle (1), the vehicle (1) including:
a floor panel (3) forming a floor surface of a cabin (8);
a battery pack (10) disposed on an upper surface of the floor panel (3) on one side in a vehicle width direction below a front seat (7);
a bracket (30) configured to cover the battery pack (10), and fixed to the floor panel (3);
a discharge port (3A) formed in the floor panel (3) on one side of the bracket (30) in the vehicle width direction, the discharge port (3A) being in communication with an outside of the cabin (8) below the floor panel (3); and
an exhaust gas duct (20) including a battery coupling part (21), a discharge port coupling part (22), and a hose part (23), and configured to discharge gas generated in the battery pack (10) to the outside of the cabin (8), the battery coupling part (21) being coupled to a rear surface of the battery pack (10), the discharge port coupling part (22) being coupled to the discharge port (3A), the hose part (23) coupling the battery coupling part (21) and the discharge port coupling part (22) to each other, the protective structure being **characterized in that**
the discharge port (3A) is formed in the floor panel (3) in a vicinity of one side surface of the bracket (30) in the vehicle width direction,
the hose part (23) extends from the battery coupling part (21) toward one side in the vehicle width direction along a rear surface (32) of the bracket (30), is bent at a position of one end portion of the bracket (30) in the vehicle width direction to extend toward a front side of the vehicle (1), and is then coupled to the discharge port coupling part (22),
the bracket (30) and the exhaust gas duct (20) are covered by a cover (40) from above and from a side,
the cover (40) includes
a first cover part (40A) configured to cover portions, of the bracket (30) and the exhaust gas duct (20), located on the other side in the vehicle width direction of the one end portion of the bracket (30) in the vehicle width direction, and
a second cover part (40B) extending from the first cover part (40A) toward the one side in the vehicle width direction, and configured to cover portions, of the bracket (30) and the exhaust gas duct (20), located on one side in the vehicle width direction of the one end portion of the bracket (30) in the vehicle width direction, and
a rear surface (42) and a front surface (41) of the cover (40) have notched parts (41A, 42A) each of which is formed in a parabolic shape by notching from below, the parabolic shape having an apex at a position of a boundary between the first cover part (40A) and the second cover part (40B).

2. The protective structure of a battery pack (10) as claimed in claim 1, wherein an upper surface (45) of the second cover part (40B) is inclined downward toward the one side in the vehicle width direction.

3. The protective structure of a battery pack (10) as claimed in claim 1 or claim 2, wherein the second cover part (40B) includes a projecting part (40C) that projects toward the one side in the vehicle width direction above the discharge port coupling part (22).

4. The protective structure of a battery pack (10) as claimed in claim 3, wherein an upper surface (45) of the second cover part (40B) has a plurality of narrow holes (40D) that are in communication with an inner surface and an outer surface of the second cover part (40B).

5. The protective structure of a battery pack (10) as claimed in claim 1, wherein the hose part (23) is made of rubber.
